# EUROPÄISCHE PATENTANMELDUNG

(11) **EP 2 204 339 A1**
(43) Veröffentlichungstag der Anmeldung: **07.07.2010**
(21) Anmeldenummer: 10000018.1
(22) Anmeldetag: 05.01.2010
(51) Int. Cl.: B65D 83/00, A47F 1/06, B65G 1/07

(54) **Behälter mit anhebbarem Boden**

(30) Priorität: 05.01.2009 DE 102009004093
(71) Anmelder: Hessemer, Frank, 66271 Kleinblittersdorf (DE)
(72) Erfinder: Hessemer, Frank, 66271 Kleinblittersdorf (DE)
(74) Vertreter: Bernhardt, Reinold

(57) **Zusammenfassung**

Die Erfindung betrifft einen Behälter mit einem anhebbaren, gegen eine vertikale Behälterwand verschiebbaren Boden (2) und Einrichtungen (4-6) zur Anhebung des Bodens (1). Erfindungsgemäß weist der Boden (2) eine umlaufende Randabwinklung (3) zur Führung des Bodens (2) entlang der vertikalen Behälterwand (1) auf.

## Beschreibung

Die Erfindung betrifft einen Behälter mit einem anhebbaren, gegen eine vertikale Behälterwand verschiebbaren Boden und Einrichtungen zur Anhebung des Bodens.

Ein Behälter solcher Art, der z.B. beim Verkauf von Waren als Vorratsbehälter eingesetzt werden kann, ist z.B. in der DE 10 2004 048 428 beschrieben. Dieser bekannte Behälter weist als Hebeeinrichtung ein pneumatisches Kissen auf, das sich im Wesentlichen nur vertikal aufweitet und die Bodenwand innerhalb des Behälters weitgehend gleichmäßig und verkantungsfrei anhebt.

Der Erfindung liegt die Aufgabe zugrunde, einen Behälter der eingangs erwähnten Art zu schaffen, bei dem geringere Anforderungen an die Präzision der Hubbewegung des Behälterbodens durch die Hebeeinrichtung bestehen und der sich dementsprechend mit geringerem Aufwand herstellen lässt.

Der diese Aufgabe lösende Behälter nach der Erfindung ist **dadurch gekennzeichnet, dass** der Boden eine umlaufende Randabwinklung zur Führung des Bodens entlang der vertikalen Behälterwand aufweist.

Eine solche Führung nach der Erfindung ermöglicht auch bei versetzt zum Schwerpunkt angreifender Hebekraft eine leichtgängige Verschiebung des Behälterbodens innerhalb des Behälters. Indem die Länge der Abwinklung in Verschiebungsrichtung in geeigneter Relation zum Durchmesser des Behälterbodens steht und z.B. mehr als 10% beträgt, lassen sich Verkantungen und Verklemmungen des Bodens im Behälter vermeiden.

Vorzugsweise läuft die Randabwinklung als geschlossener Ring um den Rand der Bodenwand um.

Die Randabwinklung kann nach unten, nach oben oder sowohl nach unten als auch nach oben gerichtet sein und die Bodenwand in der Art eines Rohrstücks umgeben.

In einer besonders bevorzugten Ausführungsform der Erfindung ist der Behälter als länglicher Zylinder mit rundem oder/und eckigem horizontalen Querschnitt ausgebildet. Die Behälterhöhe ist zweckmäßig so gewählt, dass der Behälter zur Präsentation und zum Verkauf von Waren eingesetzt werden kann, wobei durch geeignete Nachführung des Behälterbodens ein stets bequemer Zugriff auf die Ware gesichert ist. Solche Behälter, deren Außenflächen Werbeträger für die verkaufte Ware bilden können, lassen sich auch als Transportbehälter einsetzen, wobei die arbeitsaufwendige Umsortierung der Ware aus den Transportbehältern in Regale entfällt.

Vorzugsweise umfasst die Hebeeinrichtung einen durch Innendruck, vorzugsweise durch Luftdruck, aufweitbaren Innenbehälter, der verhältnismäßig einfach gestaltet sein kann. Durch ein Rückschlagventil lässt sich der jeweils erreichte Innendruck und damit der Behälterboden durch die Hebeeinrichtung in der jeweils erreichten Position festhalten.

Zweckmäßig ist der Innenbehälter aus einem biegeflexiblen Material geringer Dehnbarkeit hergestellt. Ein solcher, nur in vertikaler Richtung zusammengestauchter Innenbehälter lässt sich unter Beibehaltung seines horizontalen Querschnitts nur vertikal aufweiten. So kommt es zu keinerlei Verklemmung zwischen dem Innenbehälter und der vertikalen Wand. Zweckmäßig ragt der Innenbehälter in das durch die nach unten weisende Randabwinklung des Bodens gebildete Topfvolumen hinein, wobei zweckmäßig die horizontalen Querschnitte des Topfvolumens und des Innenbehälters aneinander angepasst sind.

In weiterer Ausgestaltung der Erfindung können die umlaufende Randabwinklung außenseitig und ggf. die Innenseite der vertikalen Behälterwand eine Oberfläche mit erhöhter Gleitfähigkeit aufweisen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Schnittdarstellung eines Behälters nach der Erfindung in unterschiedlichen Positionen des Behälterbodens,
- Fig. 2: eine geschnittene Teildarstellung des Behälters von Fig. 1, und
- Fig. 3 und 4: weitere Ausführungsbeispiele für Behälter nach der Erfindung in einer Teilansicht.

Ein länglicher Behälter mit einer vertikalen Behälterwand 1 weist horizontal einen runden, z.B. kreisrunden, oder/und eckigen, z.B. dreieckigen, Querschnitt auf. Eine Bodenwand 2 ist innerhalb des Behälters in vertikaler Richtung verschiebbar. Eine nach unten gerichtete Randabwinklung 3 der Bodenwand 2 bildet eine Führung, welche eine leichtgängige Vertikalbewegung der Bodenwand innerhalb des Behälters ermöglicht.

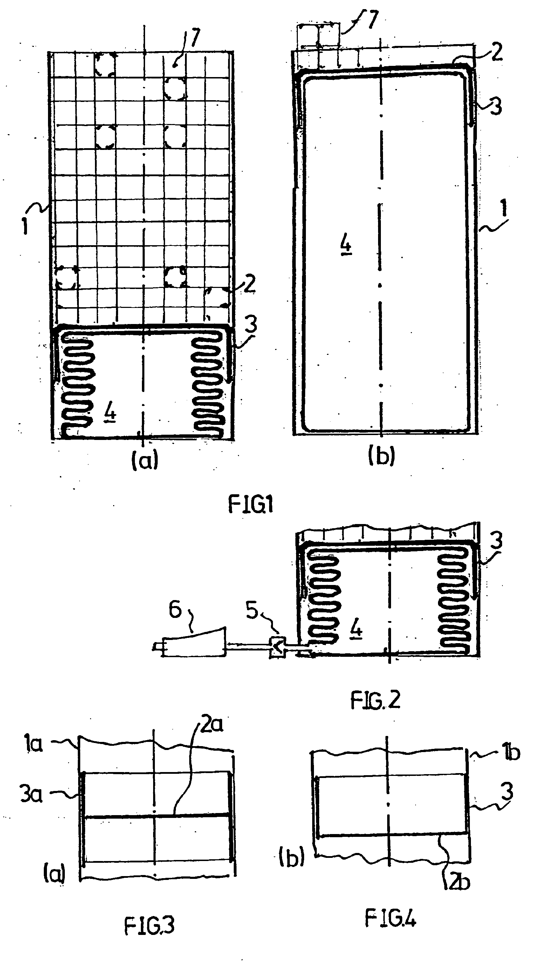

In ein durch die Randabwinklung 3 gebildetes Topfvolumen hinein ragt ein Innenbehälter 4, der aus einem biegeflexiblen, aber wenig dehnbaren Wandmaterial besteht. Wie aus Fig. 2 hervorgeht, lässt sich an ein Rückschlagventil 5 des Innenbehälters 4 z.B. eine Fußpumpe 6 anschließen, über die sich der Innenbehälter 4 mit Druckluft füllen lässt.

Der in Fig. 1 gezeigte Behälter kann mit verpackter Ware 7 gefüllt angeliefert und z.B. in einem Supermarkt zur Präsentation und zum Verkauf der Ware aufgestellt werden. Bei abgenommenem Behälterdeckel können Kunden die Ware aus dem Behälter bequem entnehmen.

Nach fortgeschrittener Entleerung des Behälters lässt sich der Innenbehälter 4 durch Betätigung der Fußpumpe 6 aufweiten, der Boden 2 damit anheben und die Ware 7 wieder in eine bequem erreichbare Position bringen. Das Rückschlagventil 5 ermöglicht den Innendruck zu halten, so dass die Bodenwand 2 in der jeweils erreichten Höhenposition verbleibt.

Gemäß Fig. 1b nimmt die Bodenwand 2 ihre maximale Höhe ein und der Innenbehälter 4 ist voll aufgeweitet. Wie Fig. 1b ferner zeigt, ist der Innenbehälter 4 in seinem horizontalen Querschnitt etwa an den Innenquerschnitt des durch die Bodenwand 2 und deren Randabwinklung 3 gebildeten Topfvolumens angepasst. Indem sich das Wandmaterial des Innenbehälters kaum dehnt und der Innenbehälter in dem in Fig. 1a gezeigten Zustand nur vertikal zusammengestaucht ist, erfolgt die Aufweitung ausschließlich in vertikaler Richtung. Es kommt nicht zu Verklemmungen des Innenbehälters 4 mit der vertikalen Wand 1 des Behälters.

Fig. 3 zeigt ein Ausführungsbeispiel eines Behälters mit einer Bodenwand 2a, die sowohl nach unten als auch nach oben gerichtete Randabwinklungen 3a aufweist. Eine Bodenwand 2b eines in Fig. 4 gezeigten Behälters ist mit einer nur nach oben weisenden Randabwinklung 3b versehen.

## Patentansprüche

1. Behälter mit einem anhebbaren, gegen eine vertikale Behälterwand (1) verschiebbaren Boden (2) und Einrichtungen (4-6) zur Anhebung des Bodens (2),
**dadurch gekennzeichnet,**
**dass** der Boden (2) eine umlaufende Randabwinklung (3) zur Führung des Bodens (2) entlang der vertikalen Behälterwand (1) aufweist.

2. Behälter nach Anspruch 1,
**dadurch gekennzeichnet,**
**dass** die Randabwinklung (3) geschlossen umläuft.

3. Behälter nach Anspruch 1 oder 2,
**dadurch gekennzeichnet,**
**dass** die Randabwinklung (3,3a,3b) nach unten oder/und oben gerichtet ist.

4. Behälter nach einem der Ansprüche 1 bis 3,
**dadurch gekennzeichnet,**
**dass** der Behälter als länglicher Zylinder mit rundem oder/und eckigem horizontalen Querschnitt ausgebildet ist.

5. Behälter nach einem der Ansprüche 1 bis 4,
**dadurch gekennzeichnet,**
**dass** die Hebeeinrichtung (4-6) einen durch Innendruck, vorzugsweise durch Luftdruck, aufweitbaren Innenbehälter (4) umfasst.

6. Behälter nach Anspruch 5,
**dadurch gekennzeichnet,**
**dass** der Innenbehälter (4) ein den Innendruck haltendes Rückschlagventil (5) aufweist.

7. Behälter nach Anspruch 5 oder 6,
**dadurch gekennzeichnet,**
**dass** der Innenbehälter ein biegeflexibles Material geringer Dehnbarkeit aufweist.

8. Behälter nach einem der Ansprüche 5 bis 7,
**dadurch gekennzeichnet,**
**dass** der Innenbehälter (4) unter Beibehaltung seines horizontalen Querschnitts vertikal aufweitbar ist.

9. Behälter nach einem der Ansprüche 5 bis 8,
**dadurch gekennzeichnet,**
**dass** der Innenbehälter (4) in das durch die nach unten weisende Randabwinklung (3,3a) des Bodens (2,2a) gebildete Topfvolumen hineinragt.

10. Behälter nach einem der Ansprüche 5 bis 9,
**dadurch gekennzeichnet,**
**dass** der Innenbehälter (4) und das Topfvolumen im horizontalen Querschnitt aneinander angepasst sind.

11. Behälter nach einem der Ansprüche 1 bis 10,
**dadurch gekennzeichnet,**
**dass** die umlaufende Randabwinklung (3) außenseitig und ggf. die Innenseite der vertikalen Behälterwand (1) eine Oberfläche mit erhöhter Gleitfähigkeit aufweist bzw. aufweisen.
